# EUROPÄISCHE PATENTSCHRIFT

(11) **EP 0 464 338 B1**
(45) Veröffentlichungstag und Bekanntmachung des Hinweises auf die Patenterteilung: **29.11.1995**
(21) Anmeldenummer: 91107259.3
(22) Anmeldetag: 04.05.1991
(51) Int. Cl.: G01D 5/22

(54) **Auswerteschaltung für einen induktiven Wegaufnehmer**
Analysing circuit for inductive sensor
Circuit d'évaluation pour un capteur de position inductif

(30) Priorität: 02.06.1990 DE 4017846
(43) Veröffentlichungstag der Anmeldung: 08.01.1992
(73) Patentinhaber: ROBERT BOSCH GMBH, 70442 Stuttgart (DE)
(72) Erfinder: Zieher, Peter, Ing. (grad), W-7147 Eberdingen (DE)

(56) Entgegenhaltungen:
- US-A- 4 510 537

## Beschreibung

Die Erfindung betrifft eine Auswerteschaltung für einen induktiven Wegaufnehmer, wie sie z. B. zum Auswerten der von einem Differentialtransformator mit verschiebbarem Kern gelieferten Signale und zum Ausgeben eines Wegaufnehmersignales dient.

### Stand der Technik

Eine Auswerteschaltung für einen beliebigen induktiven Wegaufnehmer ist z. B. beschrieben in Valvo-Datenbuch, Professionelle integrierte Analog- und Spezialschaltungen, Teil 2, Dr. Alfred Hüthig Verlag GmbH, Heidelberg, S. 818 und 819 unter dem Titel "Using the NE5521 Signal Conditioner in Multi-Faceted Application". Die dort beschriebene Schaltung ist durch die hier beigefügte Fig. 5 verkürzt wiedergegeben. Sie wird in einer Anwendung als Differentialtrafo-Weggeber beschrieben. Jedoch sind beliebige andere Anwendungen mit induktiven Wegaufnehmern entsprechend möglich, was im genannten Artikel angegeben ist. Entsprechendes gilt für die vorliegende Erfindung. Jedoch werden auch bei dieser der Kürze halber Ausführungsbeispiele nur in Anwendung als Differentialtrafo-Wegaufnehmer beschrieben.

Die bekannte, durch Fig. 5 veranschaulichte Schaltung weist einen Sinusgenerator auf, der einen Treiber zum Versorgen der Primärwicklung 10 eines Differentialtrafo-Wegaufnehmers ansteuert. Sekundärseitig sind zwei Sekundärwicklungen 11.1 und 11.2 vorhanden, deren Ausgangsspannungen sich gegensinnig ändern, wenn ein verstellbarer Kern 12 verschoben wird. Die Treiberschaltung sorgt für verdoppelten Spannungshub. Das sekundärseitige Differenzsignal wird von einem phasengekoppelten Gleichrichter unter Berücksichtigung der Phase des Treibersignals gleichgerichtet. Dieses gleichgerichtete Signal weist noch verhältnismäßig starke Welligkeit auf, weswegen es zwingend gefiltert werden muß, um schließlich eine brauchbare Wegaufnehmer-Gleichspannung UW, nach Verstärkung der gefilterten Spannung, bereitzustellen.

Um zu einem möglichst glatten Ausgangssignal zu gelangen, sind auch andere Auswerteschaltungen bekannt geworden. Bei einer Schaltung, wie sie in EP-A-0 371 020 beschrieben ist, wird ein Abgleichverfahren mit Hilfe einer Abgleich-Gleichspannung ausgeführt. Der Abgleichswert dieser Gleichspannung ist direkt proportional zu dem vom Wegaufnehmer erfaßten Weg. Es ist offensichtlich, daß diese Spannung ohne jede Welligkeit erhalten wird. Jedoch ist der Schaltungsaufwand beträchtlich.

Es bestand demgemäß das Problem, eine einfach aufgebaute Auswerteschaltung für einen induktiven Wegaufnehmer anzugeben, die ein Ausgangssignal möglichst geringer Welligkeit liefert.

### Darstellung der Erfindung

Die erfindungsgemäße Auswerteschaltung für einen induktiven Wegaufnehmer weist folgende Funktionsteile auf:
- einen Rechteckgenerator zum Ausgeben eines Rechtecksignales
- eine Treiberstufe zum Versorgen des Wegaufnehmers mit einem aus dem Rechtecksignal gewonnenen Eingangssignal,
- einem phasengekoppelten Gleichrichter, der das Ausgangssignal vom Wegaufnehmer unter Berücksichtigung der Phase des Rechtecksignals gleichrichtet
- eine Abtast-Halteschaltung zum Abtasten des gleichgerichteten Ausgangssignals in festgelegten Abtastzeitspannen
- und eine Pulslieferschaltung, die zu vorbestimmten Zeitpunkten bezogen auf die Flanken des Rechtecksignales Steuerpulse zum Festlegen der Abtastzeitspannen ausgibt, wobei die vorbestimmten Zeitpunkte so gelegt sind, daß während der durch sie festgelegten Abtastzeitspannen anzunehmen ist, daß das Ausgangssignal nach dem Eingeben eines Rechteckpulses in den Wegaufnehmer im wesentlichen eingeschwungen ist.

Diese Auswerteschaltung unterscheidet sich von der eingangs genannten entscheidend dadurch, daß sie mit Rechtecksignalen statt mit Sinussignalen arbeitet. Wird eingangsseitig an den Weggeber ein Rechteckpuls angelegt, wird ausgangsseitig ebenfalls ein Rechteckpuls erzeugt, der jedoch einschwingen muß. Das ausgangsseitige Rechtecksignal wird innerhalb solcher Zeitspannen abgetastet, für die anzunehmen ist, daß in ihnen ein eingeschwungener Zustand vorliegt. Das abgetastete Signal wird gehalten. Durch dieses Abtasten und Halten kommt es zwar noch zu einer sehr geringen Restwelligkeit, jedoch ist diese so gering, daß sie entweder vernachlässigbar ist oder durch einfachste Filtermaßnahmen beseitigt werden kann. Durch das Verwenden von Rechtecksignalen statt Sinussignalen und durch das Abtasten und Halten läßt sich somit die bisher erforderliche aufwendige Filteranordnung vermeiden. Die Auswerteschaltung liefert demgemäß bei einfachstem Aufbau ein Wegaufnehmersignal sehr geringer Welligkeit.

Eine sehr vorteilhafte Weiterbildung der erfindungsgemäßen Auswerteschaltung nutzt die Erkenntnis, daß sowohl zum phasengekoppelten Gleichrichten wie auch zum Abtasten Schaltvorgänge erforderlich sind. Vorzugsweise wird ein Gleichrichter verwendet, der so ausgebildet ist, daß er nicht laufend die Spannungsrichtungen umschaltet, sondern daß er den Umschaltvorgängen offene Schaltzustände zwischenschaltet, während denen das Ausgangssignal zu halten ist. Nur in denjenigen Zeitpunkten, in denen tatsächlich die Spannung vorzeichenrichtig weitergegeben wird, findet ein Abtasten statt. Die Gleichrichterschaltung übernimmt also durch geschickten zeitlichen Ablauf der Schaltfolge neben der Gleichrichterfunktion auch die Abtastfunktion einer Abtast/Halte-Einrichtung.

### Zeichnung

Fig. 1 Blockschaltbild einer Auswerteschaltung für einen induktiven Wegaufnehmer, mit einem eingangsseitigen Rechtecksignal und einem durch Abtasten und Halten gewonnenen Wegaufnehmersignal;
Fig. 2A, 2B und 2C zeitkorrelierte Diagramme betreffend das eingangsseitige Rechtecksignal in der Schaltung gemäß Fig. 1, ein gleichgerichtetes Ausgangssignal bzw. ein Abtastsignal;
Fig. 3 Blockschaltbild der Ausgangsseite einer Auswerteschaltung, bei der die Signale von zwei Sekundärspulen eines Differentialtrafo-Wegaufnehmers gesondert verarbeitet werden;
Fig. 4 Schaltbild eines phasengekoppelten Gleichrichters mit Abtastfunktion; und
Fig. 5 Blockschaltbild entsprechend dem von Fig. 1, jedoch für die eingangs beschriebene bekannte Schaltung mit einem eingangsseitigen Sinussignal.

### Beschreibung von Ausführungsbeispielen

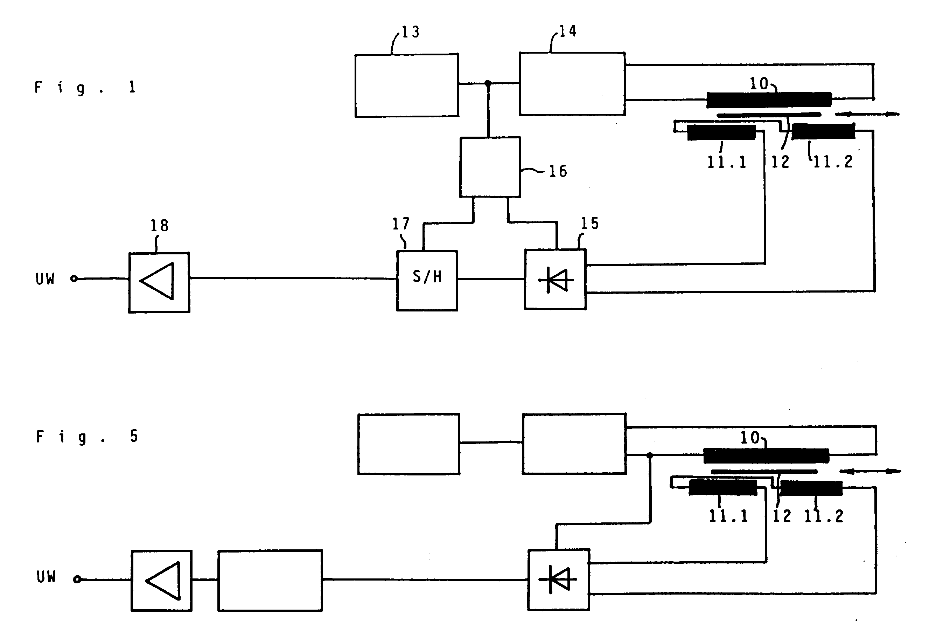

Die Auswerteschaltung gemäß Fig. 1 ist in Anwendung auf einen Differentialtrafo-Wegaufnehmer dargestellt, entsprechend wie die eingangs genannte bekannte Schaltung. Primärseitig besteht lediglich der Unterschied, daß als Signalgenerator ein Rechteckgenerator 13 statt eines Sinusgenerators vorhanden ist. An den Rechteckgenerator 13 schließt sich eine Treiberstufe 14 an, die entsprechend ausgebildet ist wie die in der eingangs zitierten Schrift dargestellte Treiberstufe zum Ansteuern der Primärwicklung 10. Die Differenzspannung von den Sekundärwicklungen 11.1 und 11.2 wird an einen phasengekoppelten Gleichrichter 15 geliefert, der allerdings Steuerpulse nicht von der Treiberstufe enthält, wie dies bei der bekannten Schaltung der Fall ist, sondern von einer Pulslieferschaltung 16, die Steuerpulse abhängig von dem vom Rechteckgenerator 13 ausgegebenen Rechtecksignal bildet. Diese Pulslieferschaltung 16 gibt Steuerpulse auch an eine Abtast/Halte-Schaltung 17 ab, die sich an den phasengekoppelten Gleichrichter 15 anschließt. Das abgetastete und gehaltene Signal wird schließlich von einem Verstärker 18 verstärkt als Wegaufnehmerspannung UW ausgegeben, die proportional zum Verstellweg des Kerns 12 des Wegaufnehmers ist.

Die Funktion der Schaltung gemäß Fig. 1 wird nun unter Bezugnahme auf die zeitkorrelierten Diagramme von Fig. 2 näher erläutert.

Das vom Rechteckgenerator 13 ausgegebene Rechtecksignal ist in Fig. 2A dargestellt. Es bewegt sich zwischen zwei Pegeln, die mit 0 und 1 gekennzeichnet sind. Die Treiberstufe 14 sorgt für Verdoppelung der Signalamplitude und für Symmetrisierung zum Massepotential, was jedoch für die im weiteren erläuterten Funktionen unerheblich ist. Aufgrund des primärseitigen Rechtecksignals entstehen sekundärseitig ebenfalls Rechtecksignale, jedoch solche mit ausgeprägten Einschwingvorgängen. Wenn jedoch die Pulsperiode des eingangsseitigen Rechtecksignales ausreichend bemessen ist, existieren in den sekundärseitigen Signalen Zeitspannen, innerhalb denen anzunehmen ist, daß das Ausgangssignal im wesentlichen einen eingeschwungenen Endpegel einnimmt. Ein solcher Spannungsverlauf mit Einschwingvorgängen und einer Zeitspanne mit im wesentlichen konstantem Endpegel ist in Fig. 2B dargestellt, und zwar für das bereits gleichgerichtete sekundärseitige Signal, wie es vom phasengekoppelten Gleichrichter 15 ausgegeben wird. Ab wann im sekundärseitigen gleichgerichteten Signal jeweils eine Zeitspanne mit im wesentlichen konstantem Potential beginnt, läßt sich experimentell bestimmen. Jeder solche Zeitpunkt liegt um eine vorgegebene Zeitspanne Δt1 nach der Flanke eines Rechtecksignals. Zu frühestens diesem Zeitpunkt schaltet die Pulslieferschaltung 16 das Abtastsignal gemäß Fig. 2C an die Abtast/Halteschaltung 17 auf hohen Pegel, was diese dazu veranlaßt, das vom phasengekoppelten Gleichrichter 15 ausgegebene Signal über eine Zeitspanne Δt2 abzutasten, die bis zum Abfallen des Abtastsignals aufniederen Pegel dauert. Dieses Umschalten auf niederen Pegel erfolgt spätestens mit dem Auftreten einer neuen Flanke des Rechtecksignals gemäß Fig. 2A. Danach wird der Signalwert gehalten. Das abgetastete und gehaltene Signal wird, wie bereits erwähnt, nach Verstärkung als Wegaufnehmerspannung UW ausgegeben.

Um auch sehr schnelle Wegänderungen mit hoher Auflösung erfassen zu können, ist es von Vorteil, die Rechteckfrequenz möglichst hoch zu wählen. Andererseits muß gewährleistet sein, daß eine Abtastzeitspanne Δt2 mit ausreichend konstantem Potential und ausreichender Länge zur Verfügung steht. Die günstigste Optimierung ist durch Versuche zu ermitteln. Diese Optimierung ist allerdings ziemlich unkritisch. Es sei darauf hingewiesen, daß die Pulslieferschaltung 16 vorteilhafterweise durch eine Pulsteilerschaltung gebildet ist.

Fig. 3 zeigt als Blockschaltbild eine bevorzugte Ausführungsform für die Sekundärseite einer Auswerteschaltung an einem induktiven Wegaufnehmer mit zwei Sekundärwicklungen, wie sie z. B. an einem Differentialtrafo- oder Differentialdrossel-Wegaufnehmer vorliegen. Von jeder der beiden Sekundärwicklungen 11.1 und 11.2 werden die Signale getrennt herausgeführt und jeweils durch eine kombinierte Gleichrichter-Abtast/Halte-Schaltung 14/15.1 bzw. 14/15.2 weiterverarbeitet. Mit Hilfe der abgetasteten Signale wird in einer Funktionskontrolle 19 eine Funktionsprüfung ausgeführt, die die Tatsache ausnutzt, daß sich die eine gleichgerichtete Sekundärspannung ihrem Wert nach immer gegensinnig zur anderen sekundärseitigen Spannung ändern muß. Die Funktionskontrolle 19 verfügt beim Ausführungsbeispiel über eine Wertetabelle, in der zu einer Vielzahl von Werten der einen Sekundärspannung jeweils ein Wertebereich plausibler Werte für die andere Sekundärspannung gespeichert sind. Fällt ein jeweiliger Wert der zweiten Sekundärspannung nicht in einen Wertebereich, der aufgrund des aktuellen Wertes der ersten Sekundärspannung aus der Tabelle ausgelesen wurde, wird ein Fehlersignal ausgegeben. Mit Hilfe der beiden sekundärseitigen Spannungen wird in einem Differenzverstärker 20 außerdem die Wegaufnehmerspannung UW gebildet. Dadurch, daß die Differenzspannung nicht mehr in herkömmlicher Weise innerhalb des Wegaufnehmers gebildet wird, sondern erst am Ende der Auswerteschaltung gebildet wird, ist die genannte Funktionskontrolle möglich. Eine solche war bisher nur möglich, wenn zwei Wegaufnehmer zum Messen derselben Größe eingesetzt wurden und überprüft wurde, ob die Signale von den beiden Wegaufnehmern zueinander plausibel waren.

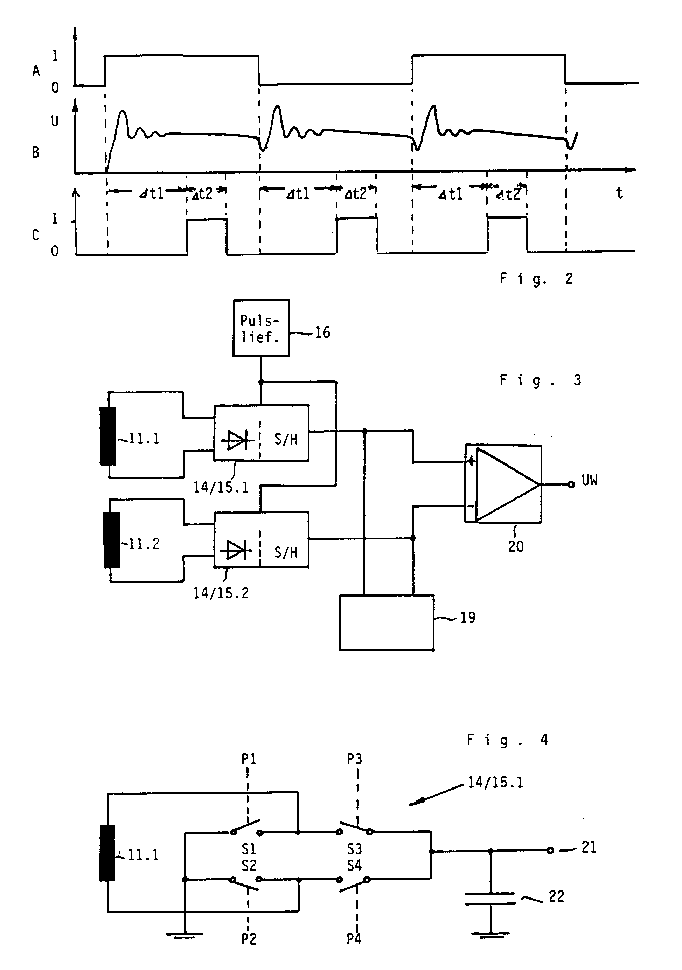

Fig. 4 zeigt ein Ausführungsbeispiel für eine kombinierte Gleichrichter-Abtast/Halte-Schaltung 14/15.1. Sie verfügt über vier Schalter S1 - S4, die über vier Steuerpulse P1 - P4 angesteuert werden, wobei jeweils ein Steuerpuls einen der Schalter ansteuert. Diese Schalter sind so mit der Sekundärwicklung 11.1 und dem Ausgang 21 der Gleichrichter-Abtast/Halte-Schaltung verbunden, daß dann, wenn die Schalter S2 und S3 geschlossen sind, der in Fig. 4 untere Anschluß der Sekundärwicklung 11.1 auf Masse liegt und das Potential vom oberen Anschluß an den Ausgang 21 gelangt, während dann, wenn die Schalter S1 und S4 geschlossen sind, der obere Anschluß der Sekundärwicklung 11.1 auf Masse liegt und das Potential vom unteren Anschluß zum Ausgang 21 weitergegeben wird. Der Ausgang ist über einen Kondensator 22 mit Masse verbunden, wodurch die jeweils an ihn gegebene Spannung gehalten wird. Das paarweise Umschalten der genannten Schalter erfolgt abhängig von der Phase des vom Rechteckgenerator 13 (Fig. 1) ausgegebenen Rechtecksignales. Die Schalter werden allerdings nicht mit jeder Flanke des Rechtecksignales betätigt, sondern nur zu den anhand von Fig. 2 erläuterten Zeitpunkten, die eine jeweilige Abtastzeitspanne festlegen. Die Signale P1 - P4 zum Steuern der Schalter S1 - S4 sind also von der Pulslieferschaltung 16 ausgegebene Steuerpulse.

Es sei nochmals darauf hingewiesen, daß die beschriebene Schaltung, wie auch herkömmliche Schaltungen, mit vielen Wegaufnehmern zusammen eingesetzt werden kann. Insbesondere läßt sich die beschriebene Schaltung mit allen Wegaufnehmern einsetzen, mit denen auch die mit Sinussignalen arbeitende, eingangs genannte Schaltung zusammenarbeitet.

Dadurch, daß bei den beschriebenen Schaltungen ausgangsseitig ein eingeschwungenes Gleichsignal abgetastet und gehalten wird, ergibt sich eine Wegaufnehmerspannung UW mit nur sehr geringer Welligkeit. Das Ausgangssignal kann daher in der Regel ohne weitere Glättung verwendet werden, weswegen in den Figuren kein Filter dargestellt ist. Sollte es in Sonderfällen erforderlich sein, fast jede Restwelligkeit zu vermeiden, reichen einfachste Glättungsmaßnahmen aus, d. h. es kann ein Filter erster Ordnung eingesetzt werden.

## Patentansprüche

1. Auswerteschaltung für einen induktiven Wegaufnehmer (10, 11.1, 11.2, 12)
**gekennzeichnet durch**
- einen Rechteckgenerator (13) zum Ausgeben eines Rechtecksignales,
- eine Treiberstufe (14) zum Versorgen des Wegaufnehmers mit einem aus dem Rechtecksignal gewonnenen Eingangssignal,
- einen phasengekoppelten Gleichrichter (15), der das Ausgangssignal vom Wegaufnehmer unter Berücksichtigung der Phase des Rechtecksignals gleichrichtet,
- eine Abtast/Halte-Schaltung (17) zum Abtasten des gleichgerichteten Ausgangssignals in festgelegten Abtastzeitspannen,
- und eine Pulslieferschaltung (16), die zu vorbestimmten Zeitpunkten bezogen auf die Flanken des Rechtecksignales Steuerpulse zum Festlegen der Abtastzeitspannen ausgibt, wobei die vorbestimmten Zeitpunkte so gelegt sind, daß während der durch sie festgelegten Abtastzeitspannen anzunehmen ist, daß das Ausgangssignal nach dem Eingeben eines Rechteckpulses in den Wegaufnehmer im wesentlichen eingeschwungen ist.

2. Auswerteschaltung nach Anspruch 1, **dadurch gekennzeichnet,** daß die Pulslieferschaltung (16) eine Teilerschaltung ist.

3. Auswerteschaltung nach einem der Ansprüche 1 oder 2, **dadurch gekennzeichnet,** daß der phasengekoppelte Gleichrichter (14/15.1) so ausgebildet ist, daß er außer zwei Schaltzuständen zum Umschalten der Spannungsrichtung noch über einen offenen Schaltzustand verfügt und er, geschaltet durch die Steuerpulse von der Pulslieferschaltung (16), das Ausgangssignal zeitweilig durch Übergang in den offenen Schaltzustand unterbricht, wodurch er zugleich die Abtastfunktion der Abtast/Halte-Schaltung ausübt.

## Claims

1. Evaluation circuit for an inductive position sensor (10, 11.1, 11.2, 12)
characterized by
- a square-wave generator (13) for outputting a square-wave signal,
- a driver stage (14) for supplying the position sensor with an input signal which is obtained from the square-wave signal,
- a phase-coupled rectifier (15) which rectifies the output signal from the position sensor taking account of the phase of the square-wave signal,
- a sample and hold circuit (17) for sampling the rectified output signal at defined sampling time intervals,
- and a pulse supplying circuit (16) which, at predetermined points in time with respect to the edges of the square-wave signal, outputs control pulses in order to define the sampling time intervals, the predetermined points in time being located such that, during the sampling time intervals which are defined by them it can be assumed that the output signal is essentially in the steady-state after a square-wave pulse has been entered into the position sensor.

2. Evaluation circuit according to Claim 1, characterized in that the pulse supplying circuit (16) is a divider circuit.

3. Evaluation circuit according to one of Claims 1 or 2, characterized in that the phase-coupled rectifier (14/15.1) is designed such that, in addition to two switching states for switching over the voltage direction, it also has an open switching state and, switched by the control pulses from the pulse supplying circuit (16) it interrupts the output signal temporarily as a result of a transition into the open switching state, as a result of which it at the same time carries out the sampling function of the sample and hold circuit.

## Revendications

1. Circuit d'évaluation pour capteur inductif de déplacement (10, 11.1, 11.2, 12) présentant les caractéristiques suivantes :
- un générateur de tension (13) fournissant un signal rectangulaire,
- un étage d'excitation (14) pour fournir au capteur de déplacement un signal d'entrée obtenu à partir du signal rectangulaire,
- un redresseur (15) à couplage de phases, redressant le signal de sortie du capteur, en considération de la phase du signal rectangulaire,
- un circuit d'échantillonnage et de blocage (17), pour échantillonner le signal de sortie redressé, pendant des périodes déterminées,
- un circuit impulsionnel (16) qui délivre des impulsions de commande pour déclencher la période d'échantillonnage à des instants définis par rapport aux branches verticales du signal rectangulaire, ces instants étant choisis de manière que l'on puisse admettre que, pendant les périodes ainsi déclenchées, le signal de sortie, après entrée d'une impulsion rectangulaire dans le capteur, est sensiblement en régime transitoire.

2. Circuit d'évaluation selon la revendication 1, caractérisé en ce que le circuit impulsionnel (16) est un circuit à découpage.

3. Circuit d'évaluation selon une des revendications 1 ou 2, caractérisé en ce que le redresseur (14/15.1) à couplage de phases est conçu de manière qu'il dispose, en plus de deux états servant à commuter la direction de la tension, d'un état ouvert de commutation et que, sous l'action de l'impulsion de commande donnée par le circuit impulsionnel (16), il interrompe temporairement le signal de sortie par passage à cet état ouvert de commutation, et qu'en même temps il accomplisse la fonction d'échantillonnage du circuit d'échantillonnage/blocage.
